# EUROPEAN PATENT APPLICATION

(11) **EP 2 915 704 A1**
(43) Date of publication of application: **09.09.2015**
(21) Application number: 14000774.1
(22) Date of filing: 04.03.2014
(51) Int. Cl.: B60R 21/017, B60R 21/203, B60R 21/217, B60Q 5/00

(54) **Airbag module with an electrical plug- or socket-type connector**

(71) Applicant: Dalphi Metal España, S.A., 36213 Vigo (ES)
(72) Inventor: Celada Yébenes, Manuel Ángel, 36213 Vigo (ES)
(74) Representative: Mehnert, Bernhard

(57) **Abstract**

An airbag module (100) for a steering wheel, comprising an inflator support (110) supporting an inflator (120), which is ignitable by means of an electrical ignition signal, said inflator (120) being electrically connected to an associated electrical plug-type connector (130), which is at least configured to supply the electrical ignition signal to said inflator (120) as required, wherein at least one connector holder (112) is provided, which fixedly mounts said electrical plug-type connector (130) to said airbag module (100).

## Description

The present invention relates to an airbag module, in particular for a steering wheel, comprising an inflator support for supporting an inflator, wherein the airbag module may further comprise at least part of an electric signal circuit for closing a trigger contact or presenting a signal, which is ignitable by means of an electrical ignition signal. The invention further relates to an inflator support and a horn contact support for such an airbag module.

From the state of the art an airbag module of this type is known, which is adapted for integration into a steering wheel as a so-called driver airbag. This known airbag module comprises an inflator that is mounted to an inflator support, to which optionally a horn contact support for supporting at least one horn contact can be mounted. The inflator can be ignited by means of a suitable electrical ignition signal, which is supplied as required from an external power source or a suitable controller to the inflator via associated electrical wires. Furthermore, the at least one optional horn contact can also be connected to associated electrical wires in order to allow a suitable energy supply from the external power source or a suitable controller to a corresponding horn. Such associated electrical wires are generally connected to at least one electrical plug-type connector, which is in turn connected via other electrical wires to the external power source or the suitable controller.

However, the electrical plug-type connector is located freely at an arbitrary position in the airbag module, which may change when the airbag module is moved. This arbitrary position of the electrical plug-type connector may complicate and unnecessarily lengthen or even prevent integration of the airbag module into an associated steering wheel.

It is, therefore, an object of the present invention to provide a new airbag module with an electrical plug-type connector that is fixedly located at a predefined position in the airbag module, as well as a new inflator support and a new horn contact support of such an airbag module.

This object is achieved by an airbag module, in particular for a steering wheel, comprising an inflator support for supporting an inflator, wherein the airbag module may further comprise at least part of an electric signal circuit for closing a trigger contact or presenting a signal, wherein said inflator and/or electric signal circuit being electrically connected to an associated electrical plug- or socked-type connector, and wherein at least one connector holder is provided, capable of fixedly mounting said electrical plug-or socket-type connector to said airbag module.

By providing the airbag module with the at least one connector holder, the associated electrical plug- or socked-type connector can be positioned in a robust and secure manner at a predefined position in the airbag module, so that the airbag module can be integrated quickly and easily into an associated steering wheel, while perturbation of the integration into the associated steering wheel because of an undefined positioning of the associated electrical plug-type connector inside the airbag module can be avoided reliably.

According to a preferred embodiment of the invention, said connector holder comprises a gliding element to which said electrical plug- or socked-type connector is glidingly fitted.

Thus, the electrical plug- or socked-type connector can rapidly be mounted to the connector holder in a user-friendly and uncomplicated manner.

According to a further preferred embodiment, said gliding element is configured for glidingly receiving said electrical plug- or socked-type connector in a gliding direction that is at least approximately parallel to a tangential or an axial direction of said inflator.

Thus, an inner unused region of the airbag module can advantageously be used for housing the electrical plug- or socked-type connector.

According to a further preferred embodiment, said gliding element is configured for glidingly receiving said electrical plug- or socked-type connector in a gliding direction that is at least approximately parallel to a radial direction of said inflator.

Thus, free space on a periphery of the airbag module can advantageously be used for housing the electrical plug- or socked-type connector.

According to a further preferred embodiment, said gliding element and said electrical plug- or socked-type connector are connected or durably connectable to each other by means of a press-fit connection.

Thus, the electrical plug- or socked-type connector can be connected to the connector holder in a robust and stable manner.

According to a further preferred embodiment, said gliding element and said electrical plug- or socked-type connector are mechanically locked to each other by means of a snap lock.

Thus, the electrical plug- or socked-type connector can reliably and securely be connected to the connector holder.

According to a further preferred embodiment, said gliding element is connected to said airbag module by means of an associated connecting element.

Thus, a connector holder with a simple configuration can be provided.

According to a further preferred embodiment, said associated electrical plug- or socked-type connector comprises an electrical plug which is pushed into an associated electrical socket, said associated electrical socket being fixedly connected or durably connectable to said at least one connector holder.

Thus, the associated electrical socket can be mounted to the connector holder prior to pushing the associated electrical plug into the associated electrical socket, so that the connector holder can be used as a backing when pushing the associated electrical plug into the associated electrical socket.

According to a further preferred embodiment, said electrical plug- or socked-type connector comprises a clamp-like or bracket-shaped receiving element which receives said at least one connector holder.

Thus, an easy and uncomplicated mounting of the electrical plug- or socked-type connector to the connector holder can be enabled.

According to a further preferred embodiment, said connector holder is integral to the inflator support.

Thus, a wide range of possible predefined positions for positioning of the electrical plug- or socked-type connector can be made available.

According to a further preferred embodiment, a horn contact support is provided that supports at least a first horn contact element, in particular as part of the electric signal circuit (180), said connector holder being integral to said horn contact support.

Thus, a wide range of possible predefined positions for positioning of the electrical plug- or socked-type connector can be made available.

According to a further preferred embodiment, said horn contact support is axially moveably mounted to said inflator support.

Thus, the horn contact support can be mounted to the airbag module in a robust and secure manner.

According to a further preferred embodiment, said connector holder is arranged in an inner region of said the airbag module, in particular below the inflator (120) support.

Thus, an inner unused region of the airbag module can advantageously be used for housing the electrical plug- or socked-type connector.

The above mentioned object is also achieved by an inflator support for an airbag module for a steering wheel, wherein at least one connector holder is provided for holding an electrical plug- or socked-type connector.

This allows for provision of a simple and robust inflator support, which enables a positioning of an electrical plug- or socked-type connector in an associated airbag module at a predefined position thereof.

The above mentioned object is further achieved by a horn contact support for an airbag module for a steering wheel, wherein at least one connector holder is provided for holding an electrical plug- or socked-type connector.

This allows for provision of a simple and robust horn contact support, which enables a positioning of an electrical plug- or socked-type connector in an associated airbag module at a predefined position thereof.

Further details and advantageous developments of the present invention are resulting from the embodiments described hereinafter and illustrated in the accompanying drawings, which are only shown by way of example and by no means meant to restrict the present invention thereto:
Fig. 1 shows a perspective view of an airbag module according to the present invention, with an inflator support and a horn contact support, which is embodied according to a first preferred embodiment and connected with an electrical plug- or socked-type connector,
Fig. 2 shows a perspective view of the electrical plug- or socked-type connector of Fig. 1,
Fig. 3 shows a perspective view of a section of the inflator support of Fig. 1, which is embodied according to a second preferred embodiment,
Fig. 4 shows the electrical plug- or socked-type connector of Fig. 2 and the inflator support of Fig. 3, and
Fig. 5 shows a perspective view of a section of the inflator support of Fig. 1, which is embodied according to a third preferred embodiment.

In the following description the terms left, right, front, rear, top and bottom relate to the respective drawing figure and may vary in dependence on a respectively selected alignment (portrait or landscape) from one drawing figure to another. Equal or equally acting parts are denoted with the same reference numbers in different figures and are usually described only once.

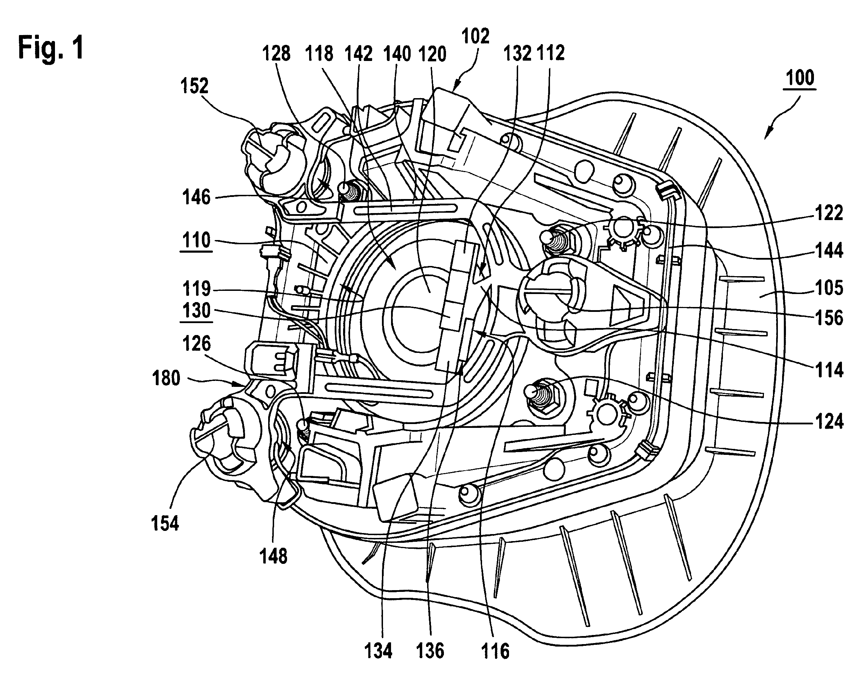

**Fig. 1** shows an airbag module 100 for an associated steering wheel according to the present invention, which is implemented as a so-called driver airbag. The airbag module 100 comprises a folded air bag 102, which is covered by an associated cover 105 and inflatable by an associated inflator 120. A gas distribution member or diffusor may optionally be arranged in an area between the inflator 120 and the folded air bag 102.

The inflator 120 is supported by an associated inflator support 110 and preferably mounted thereto via suitable damping and fixation means 122, 124, 126, 128. The inflator support 110 is preferably provided as a rigid plastic plate with an open inner region 118 that is defined by an inner opening 119 of the inflator support 110, which is fastened to an associated steering wheel via suitable fastening means 152, 154, 156, which may also connect the inflator support 110 to the cover 105.

However, it should be noted that a corresponding steering wheel and fastening of an inflator support to such a steering wheel are well-known to the skilled person and not part of the present invention, so that illustration of such a steering wheel as well as a more detailed description of the fastening means 152, 154, 156 have been omitted for brevity and conciseness. Furthermore, it should be noted that the inflator 120 can be realized e.g. by an inflator known from the state of the art, which is likewise referred to as an inflator in the state of the art and also well-known to the skilled person, so that the inflator 120 is also not described in more detail for brevity and conciseness.

Preferably, the inflator 120 is ignitable by means of an electrical ignition signal, which can be supplied to the inflator 120, in operation, via an associated electrical plug-type connector 130. Therefore, the inflator 120 is electrically connected to this electrical plug-type connector 130.

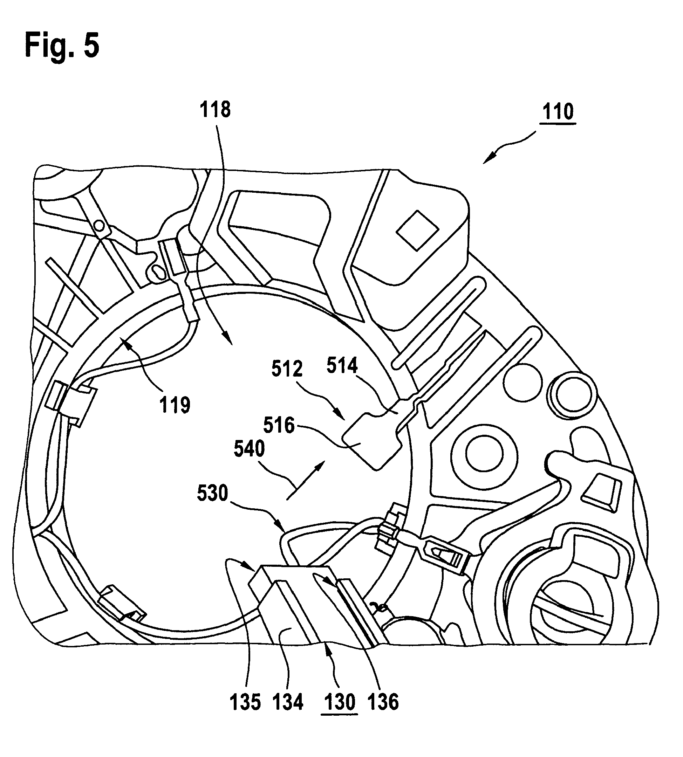

According to one embodiment, the electrical plug-type connector 130 comprises an electrical plug 132 which is pushed into an associated electrical socket 134. The electrical plug 132 is preferably connected to an external power source or a suitable controller via a first set of associated electrical wires and the electrical socket 134 is connected to the inflator 120 via a second set of associated electrical wires (e.g. 530 in Fig. 5). Preferably, the electrical plug-type connector 130 comprises a clamp-like or bracket-shaped receiving element 136, which is preferentially provided integral to the electrical socket 134.

It should be noted that the electrical plug-type connector 130 is preferably at least configured to supply the electrical ignition signal to said inflator 120 as required. However, the electrical plug-type connector 130 may also be configured, additionally or alternatively, to supply electrical energy via a suitable horn contact circuit to a horn associated with the steering wheel, to an electric lighting of an emblem provided in the cover 105, or any other electrical load associated with the airbag module 100. Furthermore, more than one electrical plug-type connector 130 can be provided with the airbag module 100. Moreover, other electrical connectors can be used instead of the plug-type connectors.

According to one aspect, the airbag module 100 is provided with an optional horn contact circuit 180 that comprises a first horn contact element 142 and a second horn contact element 144. The first horn contact element 142 is preferably at least partly U-shaped and supported by a corresponding, at least partly U-shaped horn contact support 140, which is axially moveably mounted to the inflator support 110. The second horn contact element 144 is preferably axially locked to the inflator support 110 or to the folded air bag 102.

The first horn contact element 142 and the second horn contact element 144 can be connected electrically via associated contact members 146, 148, that are illustratively already electrically connected to the first horn contact element 142. By pushing the cover 105 with the inflator support 110 and the folded air bag 102 in the direction of the horn contact support 140, an electrical contact is established between the contact members 146, 148 and the second horn contact element 144.

According to one embodiment, the horn contact support 140 comprises a connector holder 112, which is provided in order to fixedly mount the electrical plug-type connector 130 to the airbag module 100. This connector holder 112 is preferably integral to the horn contact support 140.

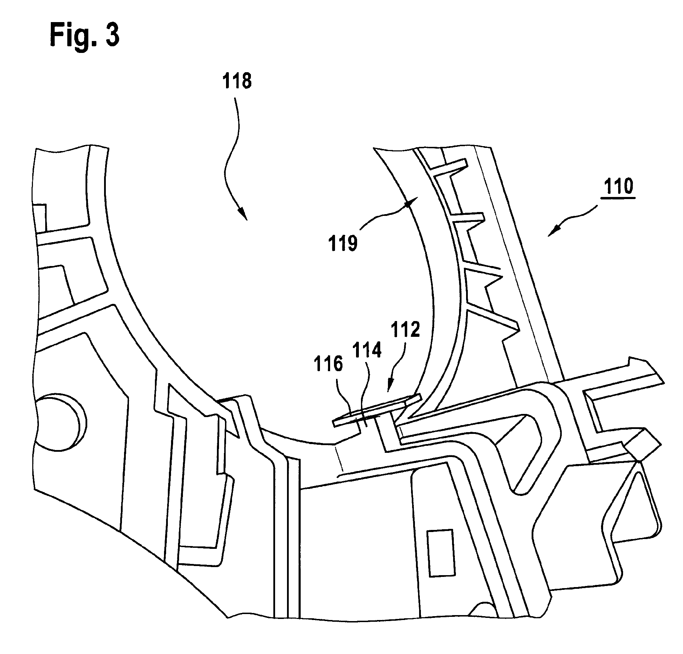

It should, however, be noted that the connector holder 112 is only integral to the horn contact support 140 for purposes of illustration and not for limiting the invention accordingly. Instead, the connector holder 112 can be positioned at any freely accessible and available space in the airbag module 100, such as e.g. at the inflator support 110, as described below with reference to Fig. 3. Accordingly, the connector holder 112 can alternatively be integral with the inflator support 110 or any other component of the airbag module 100, in the region of which the connector holder 112 is arranged, respectively. Furthermore, more than one connector holder can be provided with the airbag module 100.

Preferably, the connector holder 112 comprises a gliding element 116 to which the electrical plug-type connector 130 is glidingly fitted. This gliding element 116 is connected to the horn contact support 140 and, thus, to the airbag module 100 by means of an associated rib-like connecting element 114.

The gliding element 116 and the rib-like connecting element 114 are illustratively arc-shaped and embodied in the form of a curved bracket relative to the horn contact support 140. This allows use of the connector holder 112 as a cable guide for wires that are e.g. connected to the electrical plug-type connector 130.

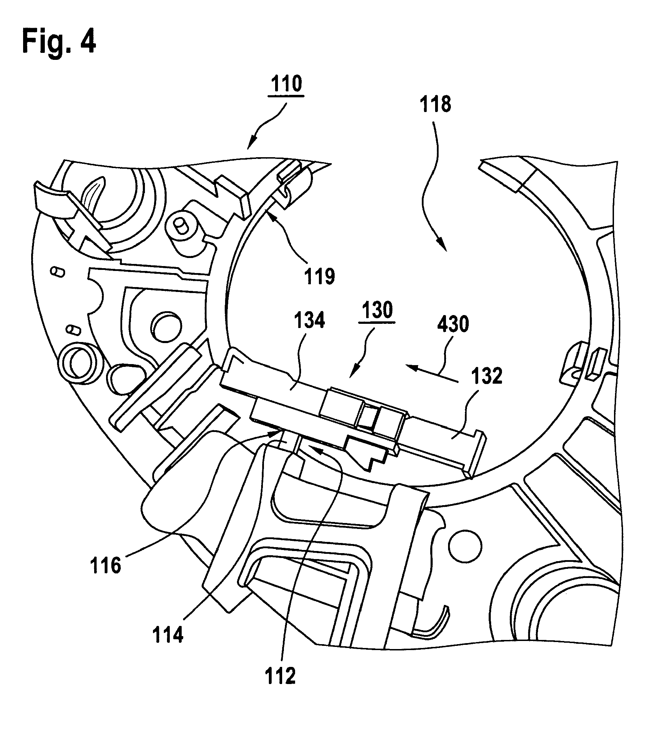

According to one aspect, the gliding element 116 is configured for glidingly receiving the electrical plug-type connector 130, and more specifically the clamp-like or bracket-shaped receiving element 136 of the electrical plug-type connector 130, in a gliding direction (430 in Fig. 4) that is at least approximately parallel to a tangential direction of the inflator 120. Furthermore, the gliding element 116 and the clamp-like or bracket-shaped receiving element 136 are preferably configured such that the gliding element 116 and the electrical plug-type connector 130 are connected to each other by means of a press-fit connection. However, it should be noted that other connection types, specifically rigid connection types, are also contemplated, such as mechanical lock connections by means of a snap lock and so on.

Preferably, the gliding element 116 is embodied such that the electrical socket 134 comprising the clamp-like or bracket-shaped receiving element 136 can be mounted thereto prior to mounting the electrical plug 132 to the electrical socket 134. Thus, the connector holder 112 can serve as a backing that compensates pushing forces occurring when pushing the electrical plug 132 into the electrical socket 134, thereby simplifying mounting of the airbag module 100.

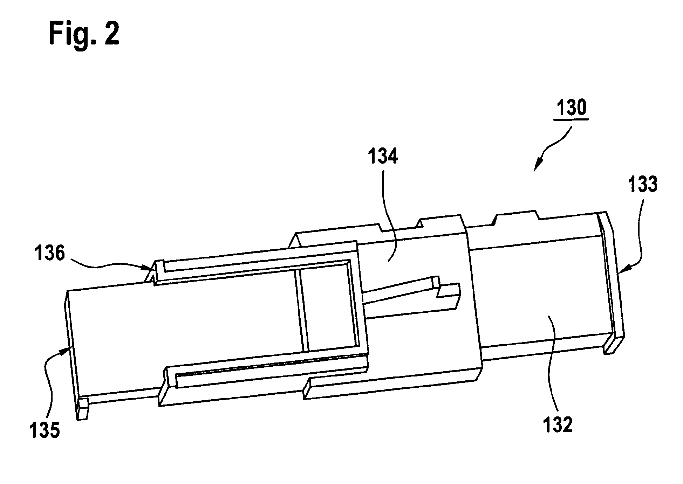

**Fig. 2** shows the electrical plug-type connector 130 of Fig. 1 for further illustration of the electrical plug 132 and the electrical socket 134. The electrical plug 132 illustratively comprises a plug side receiving end 133 for reception of associated electrical wires, which are e.g. electrically connected with an external power source or a suitable controller. The electrical socket 134 is preferably embodied with the clamp-like or bracket-shaped receiving element 136, as described above, and comprises a socket side receiving end 135 for reception of associated electrical wires (e.g. 530 in Fig. 5), which are e.g. electrically connected with the inflator 120 of Fig. 1.

**Fig. 3** shows a section of the inflator support 110 of Fig. 1, which is according to one embodiment provided with the connector holder 112 of Fig. 1. As mentioned above, the inflator support 110 may alternatively or in addition to the horn contact support 140 of Fig. 1 be provided with the connector holder 112.

Preferably, the connector holder 112 is integral to the inflator support 110. Furthermore, the connector holder 112 is arranged in the open inner region 118 of the inflator support 110 and comprises the gliding element 116, which is connected via the connecting element 114 to the inflator support 110. The gliding element 116 is illustratively plate-shaped and the connecting element 114 is, in contrast to Fig. 1, illustratively bolt-shaped. The plate-shaped gliding element 116 is illustratively arranged at least approximately perpendicular to a plane defined by the inner opening 119. Furthermore, at least the plate-shaped gliding element 116 is arranged in the open inner region 118 that is defined by the inner opening 119 of the inflator support 110.

**Fig. 4** shows a section of the inflator support 110 of Fig. 3, which is according to one embodiment provided with the connector holder 112 of Fig. 3, to which the electrical plug-type connector 130 of Fig. 1 and Fig. 2 is fixedly mounted. More specifically, the electrical plug-type connector 130 is according to one aspect glidingly received on the connector holder 120 in a gliding direction 430 that is at least approximately parallel to a tangential direction of the inner opening 119 of the inflator support 110, i.e. a tangential direction of the inflator 120 of Fig. 1.

**Fig. 5** shows a section of the inflator support 110 of Fig. 3 that is provided with a connector holder 512 according to a further embodiment. The connector holder 512 is preferably integral to the inflator support 110 and preferentially comprises a plate-shaped gliding element 516 that is arranged in the open inner region 118 that is defined by the inner opening 119 of the inflator support 110. This plate-shaped gliding element 516 is arranged at least approximately in parallel to a plane defined by the inner opening 119 and connected via a bolt-like connecting element 514 to the inflator support 110.

According to one aspect, the electrical plug-type connector 130 of Fig. 2 is glidingly receivable on the connector holder 512, i.e. the plate-shaped gliding element 516, in a gliding direction 540 that is at least approximately parallel to a radial direction of the inner opening 119 of the inflator support 110, i.e. of the inflator 120 of Fig. 1. By way of example, the socket side receiving end 135 of the electrical plug-type connector 130 is shown with connected associated electrical wires 530.

As a matter of course, plural changes and modifications are possible within the scope of the present invention. For instance, the above mentioned gliding directions are merely described for purposes of illustration and not for limiting the invention accordingly, as other gliding directions can readily be implemented. Also the described embodiments of the connector holders are merely provided by way of example, as the skilled person will readily recognize alternative embodiments that are suitable to allow fixedly connecting an electrical connector thereto.

It is important to mention, that the invention is not restricted to a driver air bag module as described above, but may be incorporated in any other air bag module, e.g. a passenger air bag module. In any such air bag module, the electric signal circuit 180 may be configured to present a signal, for example a lightening of an emblem that may be provided, e.g., on a cover of such air bag module.

## Claims

1. An airbag module (100), in particular for a steering wheel, comprising an inflator support (110) for supporting an inflator (120), wherein the airbag module (100) may further comprise at least part of an electric signal circuit (180) for closing a trigger contact or presenting a signal, said inflator (120) and/or electric signal circuit (180) being electrically connected to an associated electrical plug- or socked-type connector (130), wherein at least one connector holder (112) is provided, capable of fixedly mounting said electrical plug-or socket-type connector (130) to said airbag module (100).

2. The airbag module according to claim 1, **characterized in that** said connector holder (112) comprises a gliding element (116) and/or a snap-in element to which said electrical plug- or socked-type connector (130) is glidingly fitted.

3. The airbag module according to claim 2, **characterized in that** said gliding element (116) is configured for glidingly receiving said electrical plug- or socked-type connector (130) in a gliding direction (430) that is at least approximately parallel to a tangential direction of said inflator (120) or inflator support (110).

4. The airbag module according to claim 2, **characterized in that** said gliding element (116) is configured for glidingly receiving said electrical plug- or socked-type connector (130) in a gliding direction (540) that is at least approximately parallel to a radial or an axial direction of said inflator (120).

5. The airbag module according to at least one of the preceding claims 2 to 4, **characterized in that** said gliding element (116) and said electrical plug- or socked-type connector (130) are connected to each other by means of a press-fit connection.

6. The airbag module according to at least one of the preceding claims 2 to 5, **characterized in that** said gliding element (116) and said electrical plug- or socked-type connector (130) are mechanically locked to each other by means of a snap lock.

7. The airbag module according to at least one of the preceding claims 2 to 6, **characterized in that** said gliding element (116) is connected to said airbag module (100) by means of an associated connecting element (114).

8. The airbag module according to at least one of the preceding claims, **characterized in that** said associated electrical plug- or socked-type connector (130) comprises an electrical plug (132) which is pushed into an associated electrical socket (134), said electrical plug (132) or said associated electrical socket (134) being fixedly connected or durably connectable to said at least one connector holder (112).

9. The airbag module according to at least one of the preceding claims, **characterized in that** said electrical plug- or socked-type connector (130) comprises a clamp-like or bracket-shaped receiving element (136) which receives said at least one connector holder (112).

10. The airbag module according to at least one of the preceding claims, **characterized in that** said connector holder (112) is integral to the inflator support (110).

11. The airbag module according to at least one of the preceding claims 1 to 9, **characterized in that** a horn contact support (140) is provided, in particular as part of the electric signal circuit (180), that supports at least a first horn contact element (142), said connector holder (112) being integral to said horn contact support (140).

12. The airbag module according to at least one of the preceding claims 10 or 11, **characterized in that** said horn contact support (140) is axially moveably mounted to said inflator support (110).

13. The airbag module according to at least one of the preceding claims, **characterized in that** said connector holder (112) is arranged in an inner region (118) of said inflator support (110), in particular below the inflator (120).

14. An inflator support (110) for an airbag module (100) for a steering wheel, **characterized in that** at least one connector holder (112) is provided for holding an electrical plug- or socked-type connector (130).

15. A horn contact support (140) for an airbag module (100) for a steering wheel, **characterized in that** at least one connector holder (112) is provided for holding an electrical plug- or socked-type connector (130).
